# EUROPEAN PATENT SPECIFICATION

(11) **EP 3 820 687 B1**
(45) Date of publication and mention of the grant of the patent: **11.10.2023**
(21) Application number: 19749420.6
(22) Date of filing: 27.06.2019
(51) Int. Cl.: B29D 30/00, B65G 47/91, B25J 15/06, B25J 9/00

(54) **METHOD FOR CONTROLLING THE APPLICATION OF NOISE REDUCING ELEMENTS TO TYRES FOR VEHICLE WHEELS AND WORKING STATION THEREFOR**
VERFAHREN ZUM KONTROLLIERTEN AUFBRINGEN VON GERÄUSCHDÄMPFENDEN ELEMENTEN AUF EINEN REIFEN FÜR FAHRZEUGRÄDER UND ARBEITSSTATION DAFÜR
PROCÉDÉ D'APPLICATION CONTRÔLÉE DES ÉLÉMENTS RÉDUCTEURS DE BRUIT À UN PNEU POUR ROUES DE VÉHICULE ET POSTE DE TRAVAIL ASSOCIÉ

(30) Priority: 11.07.2018 IT 201800007116
(43) Date of publication of application: 19.05.2021
(73) Proprietor: Pirelli Tyre S.p.A., 20126 Milano (IT)
(72) Inventor: BOSCAINO, Ivan Gildo, 20126 Milano (IT); FABBRETTI, Marco, 2016 Milano (IT); VANIGLIA, Erika, 20131 Milano (IT)
(74) Representative: Metroconsult Srl
(86) International application number: PCT/IB2019/055429
(87) International publication number: WO 2020/012285

(56) References cited:
- EP-A1- 2 520 521
- WO-A1-2016/067192
- WO-A1-2016/088014
- WO-A1-2018/096458
- WO-A1-2018/116209

## Description

The present invention relates to a method for controlling the application of noise reducing elements to tyres for vehicle wheels.

Typically, a tyre for vehicle wheels has a substantially toroidal structure about an axis of rotation thereof in operation, and has an axial middle plane orthogonal to the axis of rotation, said plane being typically a plane of (substantial) geometric symmetry - i.e. without considering some possible minor asymmetries due, for example, to the tread pattern and/or to writings on the sidewalls and/or on the inner structure.

The "inner cavity" is the space delimited by the inner surface of the tyre and by the surface of the mounting rim facing towards the inner surface of the tyre, when the latter is in the mounted condition.

The "inner circumferential development" is the linear development of the inner surface of the tyre in its axial middle plane.

The terms "radial" and "axial" and the expressions "radially inner/outer" and "axially inner/outer" are used herein to refer to a direction perpendicular and a direction parallel to the axis of rotation of the tyre, respectively.

The terms "circumferential" and "circumferentially" are instead used herein with reference to the direction of annular development of the tyre, i.e. the rolling direction of the same.

The expression "noise reducing element" refers to an element that, when applied to the inner surface of a tyre (typically to the inner surface portion corresponding to the tread band), has the ability to attenuate the noise generated during the rolling action because of the presence of the inner cavity (cavity noise). This ability of the aforementioned element is usually due to the type of material(s) employed for manufacturing said element and/or the dimensions of the same and/or the number of elements inserted in the cavity. Such noise reducing elements may consist of blocks, e.g. having a substantially parallelepiped shape, of porous material, e.g. polymeric foam material, which are glued to that portion of the inner surface of the tyre which corresponds to the tread band and are arranged sequentially, one after another, along the inner circumferential development of the tyre.

The term "digital image", or equivalently "image", generally refers to a data set, typically contained in a computer file, wherein each tuple of coordinates (typically each pair of coordinates) of a finite set (typically a bidimensional and matricial one, i.e. N rows x M columns) of tuples of spatial coordinates (each umpteen corresponding to one "pixel") is associated with a corresponding set of numerical values (which may be representative of different quantity types). For example, in monochromatic images (like grayscale ones) this set of values consists of a single value in a finite scale (typically with 256 levels or shades), such value being, for example, representative of the brightness (or intensity) level of the respective umpteen of spatial coordinates, when displayed. Another example is given by colour images, wherein the set of values represents the brightness level of a plurality of colours, or channels, which are typically the fundamental colours (e.g. red, green and blue in RGB coding, or cyan, magenta, yellow and black in CMYK coding). The term "image" does not necessarily imply the actual visualization thereof.

Any reference to a specific "digital image" includes, more generally, any digital image that may be obtained by subjecting said specific digital image to one or more digital processing steps (e.g. filtering, equalization, smoothing, binarization, thresholding, morphological transformations (opening, etc.), derivative or integral calculations, etc.).

Document WO2016/067192 A1, in the name of the same Applicant, describes a process and an apparatus for automatically applying a noise reducing element to a tyre for vehicle wheels. The noise reducing element is guided in a predetermined direction and, during said guiding action, an adhesive material is applied onto a first surface of the noise reducing element. In particular, the noise reducing element is disposed on a first conveyor belt movable along a feeding direction and having, on a top surface thereof, a continuous film supporting a layer of adhesive material. The noise reducing element is pressed against the first conveyor belt, so that it integrally adheres to a portion of said layer of adhesive material. Through the effect of the motion of the first conveyor belt along said feeding direction, the noise reducing element is transferred to a second conveyor belt arranged downstream of the first conveyor belt. During this transfer, the continuous film is held at the first conveyor belt and, as soon as the noise reducing element leaves the first conveyor belt, the portion of said layer of adhesive material that adheres to the noise reducing element is detached from the layer of adhesive material that is present on said first conveyor belt. The noise reducing element is then picked up by the second conveyor belt and positioned in a predetermined position on a radially inner surface of the tyre for vehicle wheels, bringing said first surface into contact with said radially inner surface.

Document EP 2 100 833 A1 describes a device for individual conveying of elongate articles. The device is provided with a video camera adapted to monitor transversal seatings as they transit, in order to detect, in each one of them, the presence or absence of elongate articles and, in the former case, the number, position and orientation thereof. The device is equipped with robotized manipulating members, serving said video camera, adapted to remove, from each one of the occupied transversal seats on arrival, at least one of said elongate articles, on the basis of the coordinates provided by the vision camera itself, in order to transfer the article to an output position downstream, with a predetermined orientation.

The Applicant has observed that, in order to effectively reduce said noise, it is appropriate to cover the radially inner surface of the tyre, almost throughout its extension, with noise reducing elements.

The Applicant has also observed that, still for the purpose of effectively reducing noise, it may be appropriate to employ noise reducers having different lengths in the circumferential direction. In particular, the Applicant has observed that, by using noise reducing elements of different length, it is possible to limit the generation of harmonics due to the presence of an excessively regular pattern, created by noise reducing elements all having substantially the same length.

The Applicant has also observed that these two arrangements require that the noise reducing elements be positioned on the radially inner surface of the tyre with particular precision and accuracy.

However, the Applicant has verified that, in a situation like the one described in WO 2016/067192 A1, the position of the noise reducing elements on the conveyor belt that is supporting them as they are picked up, e.g. by a robotized arm, to be applied to the radially inner surface of the tyre is essentially unpredictable *a priori.* In particular, the Applicant has verified that this is caused by the pulling action to which each noise reducing element is subjected when, jointly with the associated adhesive, it is separated from the contiguous noise reducing element, and also by the transverse movements/oscillations (which are small but not negligible) of the conveyor belt itself. The Applicant has thus verified that a robotized arm employed for picking up and applying the noise reducing elements in a situation like the one described in WO 2016/067192 A1, since it does not know the exact position of the noise reducing element on the conveyor belt, cannot pick it up in a precise manner and apply it to the tyre with the desired accuracy. This implies the risk, for example, of adjacent noise reducing elements overlapping each other, misalignment and/or wrong orientation of the noise reducing elements relative to the axial middle plane of the tyre.

The Applicant has also verified that, once a noise reducing element has been incorrectly applied to a tyre, dedicated operations need to be carried out in order to remove such noise reducing element and clean the corresponding portion of the radially inner surface of the tyre. Such operations may be carried out manually by an operator, when action is taken with sufficient rapidity; otherwise, it will be necessary to employ specific equipment, e.g. machines using dry ice. At any rate, an incorrectly positioned noise reducing element will cause wasted time and resources.

The Applicant has perceived that, by improving the knowledge of the position wherefrom the noise reducing elements are picked up, e.g. by a robotized arm, it is possible to improve the precision of the positioning of the noise reducing elements themselves on the radially inner surface of the tyre.

As perceived by the Applicant, such a solution should also allow handling noise reducing elements having different dimensions, without adversely affecting the cycle time, i.e. the total time necessary for the application of all the noise reducing elements required by a given tyre.

The Applicant has then found that, by using an image detection system aimed at precisely detecting the noise reducing elements on the moving elements (e.g. conveyor belts, conveyors, etc.) that are carrying them to the respective pick-up zone/point for application to the inside of a tyre, it is possible to have such elements be picked up, e.g. by a robotized arm, with the desired accuracy and then positioned correctly on the radially inner surface of the tyre, in accordance with the design specifications.

According to independent claim 1, the invention relates to a method for controlling the application of noise reducing elements to tyres for vehicle wheels.

The Applicant believes that, in this manner, the application of the noise reducing elements to the radially inner surface of the tyre can be effected with the required precision, thereby attaining the desired performance in terms of noise reduction and avoiding the need for interventions for removing any incorrectly positioned noise reducing elements. In particular, the Applicant has verified that it is possible to keep the positioning errors below a threshold of approx. one millimetre and the orientation errors below a threshold of approx. 0.1 degrees.

The Applicant also believes that this solution allows handling noise reducing elements having different dimensions, because the use of an image detection system makes it possible to work with different elements, even without particularly complex and sophisticated hardware/software structures.

Finally, the Applicant believes that this solution allows the cycle time to remain essentially unchanged, because the image acquisition and processing tasks take negligible times in comparison with the operations necessary for preparing, picking up and positioning the noise reducing elements.

According to independent claim 10, the invention relates to a working station for the application of noise reducing elements to tyres for vehicle wheels.

Under at least one of the above-mentioned claims, the present invention may have at least one of the following preferred features.

Preferably, the noise reducing elements of said first set are arranged in order on said first conveyor starting from a first initial noise reducing element.

Preferably, the first initial noise reducing element is the noise reducing element that precedes, in the advancing direction of said first conveyor, all the other noise reducing elements of the first set.

Preferably, said first images are representative of said first initial noise reducing element.

Preferably, said first parameters are associated with said first initial noise reducing element.

Preferably, upon receiving said first movement command, said robotized arm couples said terminal tool to said first initial noise reducing element.

Preferably, upon receiving said first movement command, said robotized arm applies said first initial noise reducing element to the radially inner surface of said tyre.

Preferably, it is envisaged to activate said processor for determining at least one first length of said at least one noise reducing element of said first set.

Preferably, said first length is determined on the basis of said first images.

Preferably, it is envisaged to activate said processor for making a first comparison between said first length and one or more first reference values.

Preferably, it is envisaged to activate said processor for selectively generating said first movement command as a function of said first comparison.

Preferably, the noise reducing elements of the first set substantially have a first dimension.

Preferably, the first dimension of the noise reducing elements of said first set is greater than or equal to 100 mm and/or smaller than or equal to 300 mm.

Preferably, said first conveyor has a first terminal zone, wherefrom said at least one noise reducing element of said first set is picked up.

Preferably, it is envisaged to provide a contrast wall at said first terminal zone.

Preferably, it is envisaged to activate said processor for generating a discard signal to move said contrast wall and cause said at least one noise reducing element of said first set to be discarded.

Preferably, said discard signal will be generated if said first length does not match said one or more first reference values.

Preferably, it is envisaged to feed to said working station, by means of at least one second conveyor, at least one second set of noise reducing elements.

Preferably, it is envisaged to activate a detection system in order to detect one or more second images.

Preferably, said second images are representative of at least one noise reducing element of said second set.

Preferably, it is envisaged to activate said processor for determining second parameters.

Preferably, said second parameters are determined as a function of said second images.

Preferably, said second parameters are indicative of coordinates, in a second plane parallel to said second conveyor, of a point representative of said at least one noise reducing element of said second set.

Preferably, said second parameters are indicative of an angle of orientation of said at least one noise reducing element of said second set relative to a direction determined on said second plane.

Preferably, based on said second parameters, it is envisaged to send a second movement command to said robotized arm.

Preferably, said second movement command causes said robotized arm to position and orient said terminal tool in accordance with said second parameters, so as to couple said terminal tool to said at least one noise reducing element of said second set.

Preferably, said second movement command causes said robotized arm to pick up, from said second conveyor, said at least one noise reducing element of said second set.

Preferably, said second movement command causes said robotized arm to apply said at least one noise reducing element of said second set to the radially inner surface of said tyre.

Preferably, the noise reducing elements of said second set are arranged in order on said second conveyor starting from a second initial noise reducing element.

Preferably, the second initial noise reducing element is the noise reducing element that precedes, in the advancing direction of said second conveyor, all the other noise reducing elements of the second set.

Preferably, said second images are representative of said second initial noise reducing element.

Preferably, said second parameters are associated with said second initial noise reducing element.

Preferably, upon receiving said second movement command, said robotized arm couples said terminal tool to said second initial noise reducing element.

Preferably, upon receiving said second movement command, said robotized arm applies said second initial noise reducing element to the radially inner surface of said tyre.

Preferably, it is envisaged to activate said processor for determining, based on said second images, at least one second length of said at least one noise reducing element of said second set.

Preferably, it is envisaged to activate said processor for making a second comparison between said second length and one or more second reference values.

Preferably, it is envisaged to activate said processor for selectively generating said second movement command as a function of said second comparison.

Preferably, the noise reducing elements of the second set substantially have a second dimension, different from said first dimension.

Preferably, the second dimension of the noise reducing elements of said second set is greater than or equal to 100 mm and/or smaller than or equal to 300 mm.

Preferably, a difference between the first dimension of the noise reducing elements of said first set and the second dimension of the noise reducing elements of said second set is greater than or equal to 10 mm and/or smaller than or equal to 80 mm.

Preferably, said second conveyor has a second terminal zone, wherefrom said at least one noise reducing element of said second set is picked up.

Preferably, said contrast wall is positioned at said second terminal zone.

Preferably, it is envisaged to activate said processor for generating a discard signal to move said contrast wall and cause said at least one noise reducing element of said second set to be discarded.

Preferably, said discard signal will be generated if said second length does not match said one or more second reference values.

Preferably, said processor is configured for determining at least one first length of said at least one noise reducing element of said first set.

Preferably, said processor is configured for making a first comparison between said first length and one or more first reference values.

Preferably, said processor is configured for selectively generating said first movement command as a function of said first comparison.

Preferably, said processor is configured for generating a discard signal to move said contrast wall and cause said at least one noise reducing element of said first set to be discarded.

Preferably, said robotized arm is configured for picking up noise reducing elements of a second set, supplied by a second conveyor.

Preferably, said detection system is configured for detecting one or more second images representative of at least one noise reducing element of said second set.

Preferably, said processor is configured for determining second parameters as a function of said second images.

Preferably, said processor is configured for sending to said robotized arm, based on said second parameters, a second movement command.

Preferably, said detection system comprises a first detection device configured for detecting said first images.

Preferably, said detection system comprises a second detection device configured for detecting said second images.

Preferably, said processor is configured for determining, based on said second images, at least one second length of said at least one noise reducing element of said second set.

Preferably, said processor is configured for making a second comparison between said second length and one or more second reference values.

Preferably, said processor is configured for selectively generating said second movement command as a function of said second comparison.

Preferably, said processor is configured for generating said discard signal to move said contrast wall and cause said at least one noise reducing element of said second set to be discarded.

Preferably, said robotized arm is an anthropomorphic robotized arm with at least six axes of rotation.

Further features and advantages will become more apparent in the light of the following detailed description of a preferred but non-limiting embodiment of the invention. Reference will be made in the following description to the annexed drawings, which are also provided by way of illustrative and non-limiting example, wherein:
- Figure 1 schematically shows, for descriptive purposes only, a sectional view (not in scale) along the axial middle plane of a tyre provided by a working station in accordance with the invention;
- Figure 1a shows one possible deformation profile of a noise reducing element applied to the inner surface of a tyre;
- Figure 2 shows a block diagram representing a schematic plan view of a working station in accordance with the present invention;
- Figure 3 shows a block diagram representing a schematic side view of the working station of Figure 1;
- Figure 4 schematically shows an element associated with the working station of Figures 2-3;
- Figure 5 schematically shows one possible embodiment of a part of the working station represented in Figure 2.

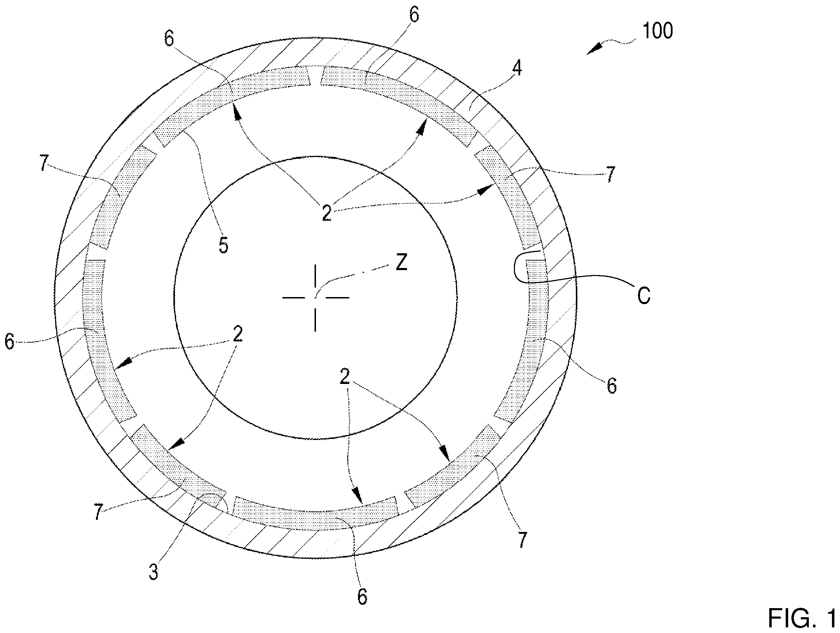

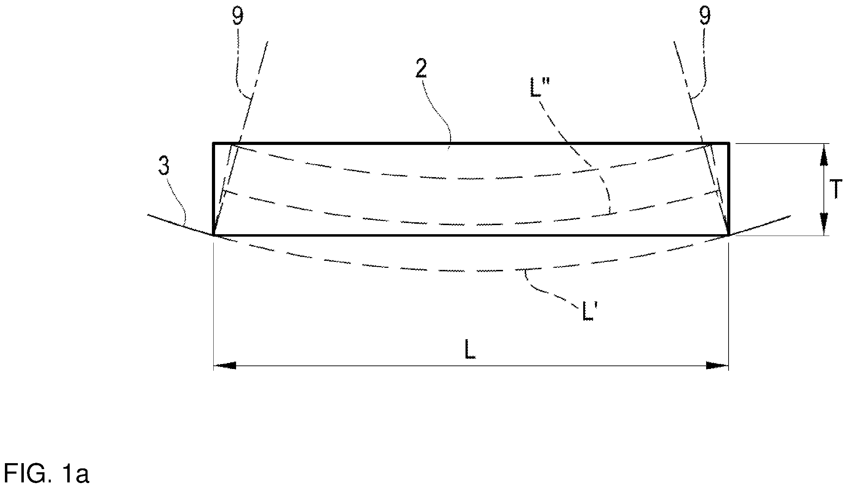

With reference to Figure 1, the tyre 100 has an axis of rotation Z and an inner circumferential development of the radially inner surface 3 in the axial middle plane.

A sequence of noise reducing elements 2, preferably having at least two different dimensions (circumferential lengths), is applied circumferentially onto the radially inner surface portion 3 of the tyre, preferably in a position corresponding to the tread band 4.

In the tyre shown by way of example in Figure 1, the sequence of noise reducing elements consists of nine elements, wherein five noise reducing elements 6 have a dimension L1 greater than the dimension L2 of the remaining four noise reducing elements 7.

Figure 1a shows one possible deformation profile of a noise reducing element 2, which is implemented, by way of example, as a right parallelepiped in its undeformed configuration (although other shapes are also possible, such as prisms, non-right parallelepipeds, etc.).

Each noise reducing element, when undeformed (continuous line), has a length L, a width (orthogonal to the plane of Figure 1a), and a thickness T.

When it is applied to the tyre (dashed line), the element 2 is subjected to a deformation to adapt its own shape to the curved inner surface of the tyre. The nature and extent of the deformation depends on one or more factors, such as the material and shape of the undeformed element 2, the curvature profile of the tyre, and the mode of deformation of the element.

It must be pointed out that, because of said deformation, the distance between two adjacent elements may change along the direction of the thickness of the elements (i.e. along the radial direction). For example, the lateral faces of the elements 2 applied to the tyre may converge towards the Z axis and get closer to each other (as shown in Figure 1), so that the distance between two adjacent elements measured at the radially inner faces 5 will be smaller than the distance measured at the radially inner surface 3.

In the present description, any reference to the length, width and thickness of an element 2 will relate to the element in the undeformed condition. Reference may however also be made, without departing from the present invention, to the deformed element. For example, it will be possible to consider either the circumferential length L' of the face in contact with the radially inner surface 3 of the tyre or the circumferential length L" at any point along the thickness, e.g. at half height (as shown in Figure 1a), or at the radially inner face 5.

Likewise, the inner circumferential development C as measured on the radially inner surface 3 (typically the radially inner surface of the liner) in the axial middle plane will be considered herein. It may however also be possible to consider, without departing from the present invention, other linear circumferential developments dependent on said inner circumferential development C. For example, with reference to Figure 1, one may consider the circumference of the circle enveloping the radially inner surfaces 5 of the elements 2.

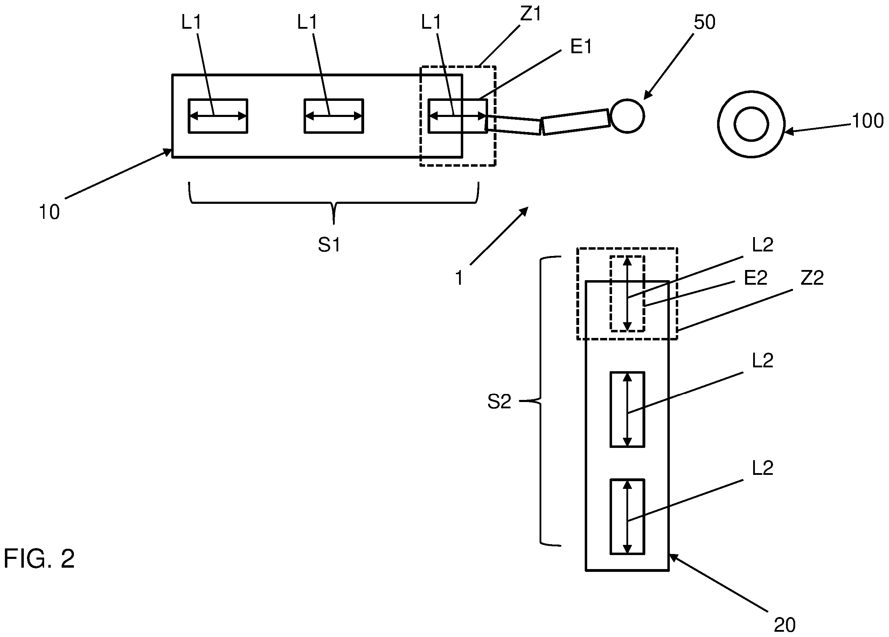

Figures 2-3 schematically show a working station 1 in accordance with the invention.

The working station 1 comprises a robotized arm 50.

Preferably, the robotized arm 50 is an anthropomorphic robotized arm. More preferably, said robotized arm 50 is an anthropomorphic robotized arm with at least six axes of rotation.

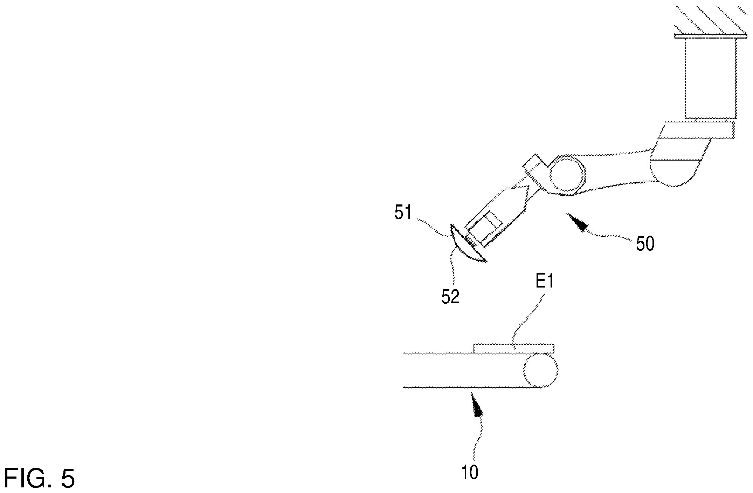

Preferably, the robotized arm 50 is equipped with a terminal tool 51 (Fig. 5), which is positioned and oriented through movements of the robotized arm 50 itself.

By means of the terminal tool 51, the robotized arm 50 carries out the task of picking up noise reducing elements supplied to the working station 1 and applying the same to the radially inner surface of a sequence of tyres.

In one embodiment, the terminal tool 51 may have a plurality of suction channels (not shown) fluid-dynamically connected to a selectively operable suction device. Therefore, the gripping of the noise reducing elements and the holding thereof during the movements of the robotized arm 50 towards the tyre occur through the effect of the suction force exerted on the noise reducing elements when said suction device is activated. The noise reducing elements are released onto the radially inner surface of the tyre following the deactivation of said suction device.

Preferably, the terminal tool 51 comprises an engagement surface 52 having a curved profile. Preferably, the profile of the engagement surface 52 has a radius of curvature that is substantially the same as that of the radially inner surface 3 of the tyre 100 along the circumferential direction of the latter. In particular, the value of the radius of curvature of the engagement surface 52 is substantially equal to a mean value of the radii of curvature of the inner surfaces of a lot of tyres whereon the noise reducing elements have to be glued.

The sequence of tyres is fed to the working station by suitable feeding devices (not shown). For simplicity, Figure 2 shows only one tyre 100, to which the noise reducing elements are applied by the robotized arm 50.

Preferably, each noise reducing element comprises or is made of a soundproofing material, preferably a polymeric foam, preferably polyurethane foam, preferably of the open-cell type.

Preferably, the soundproofing material has a density in the range of approx. 5 kg/m³ to approx. 60 kg/m³.

Preferably, each noise reducing element is a parallelepiped (typically, but not necessarily, a right one) having a length, a width and a thickness. Preferably, each noise reducing element has, in a plan view, a rectangular shape having said length and said width. For example, said length may be the major side of the rectangular shape. When in use, the thickness is disposed radially and the width is substantially disposed in the axial direction (not considering possible deformations of the element).

As will become clearer hereinafter, the noise reducing elements employed in the present invention are divided into at least a first set S1 and a second set S2.

Preferably, all the noise reducing elements belonging to each set have the same three-dimensional shape and/or substantially the same length, the same width and the same thickness, thus facilitating the handling thereof.

Preferably, all the noise reducing elements of all sets have the same width and/or thickness. In other words, the noise reducing elements belonging to different sets differ only in the length value. In this manner, each sequence of noise reducing elements is substantially uniform throughout its development as far as the transversal dimension is concerned, thus preventing the rolling tyre from suffering from unbalancing problems and obtaining an even occupation of the cavity.

Preferably, all the noise reducing elements belonging to all sets have the same three-dimensional shape, thus facilitating the handling thereof.

Preferably, the length of all noise reducing elements is greater than or equal to 100 mm, more preferably greater than or equal to 150mm, and/or smaller than or equal to 300 mm, more preferably smaller than or equal to 250mm. Preferably, the width of all noise reducing elements is greater than or equal to 80 mm and/or smaller than or equal to 160 mm, more preferably smaller than or equal to 140 mm.

Preferably, the thickness of all noise reducing elements is greater than or equal to 10 mm and smaller than or equal to 50 mm.

Such noise reducing elements have good noise attenuation properties; they can be easily attached to the inner surface of the tyre by gluing by means of an adhesive; once glued, they will not deteriorate and will not detach when subjected to the deformation cycles undergone by the tyre rolling on the road; they will also keep the other performances of the tyre substantially unchanged.

Preferably, the noise reducing elements cover at least 80%, more preferably at least 90%, of the inner circumferential development of the tyre 100.

Preferably, the distance between two adjacent noise reducing elements, measured along the direction of inner circumferential development of the tyre 100, is comprised between 5mm and 20mm, in particular between 10mm and 15mm.

A first conveyor 10 supplies a first set S1 of noise reducing elements to the working station 1.

Each noise reducing element of the first set S1 has substantially a first dimension L1. In practical terms, this means that all the noise reducing elements of the first set S1 have a length substantially equal to the first dimension L1.

The term "substantially" referred to the dimensions of the noise reducing elements is meant to take into account production tolerances (due, for example, to the cutting operations) and/or manipulation tolerances (e.g. the adaptation to the curved inner surface). Said production and/or manipulation tolerances usually imply dimensional variations in the noise reducing elements not exceeding approx. ±3% of the nominal dimension. For example, for a circumferential dimension comprised between approx. 150 mm and approx. 250 mm, the tolerance may be, for example, approx. 1.5 mm.

A second conveyor 20 supplies a second set S2 of noise reducing elements to the working station 1.

Each noise reducing element of the second set S2 has substantially a second dimension L2. In practical terms, this means that all the noise reducing elements of the second set S2 have a length substantially equal to the second dimension L2.

Preferably, a difference between the first dimension L1 and the second dimension L2 is greater than or equal to 10mm, more preferably greater than or equal to 20 mm, and/or smaller than or equal to 80 mm, more preferably smaller than or equal to 60mm.

The noise reducing elements of the first and second sets S1, S2 may be disposed, for example, as described in international patent application WO 2016/067192 A1 in the name of the same Applicant, wherein the noise reducing elements are initially positioned on a first conveyor belt; the noise reducing elements are then transferred onto a second conveyor belt, whereon they are coupled to a continuous film of adhesive material; as they are transferred onto a third conveyor belt, the adhesive material is cut to size, so that the noise reducing elements on the third conveyor belt are separated from one another, each one coupled to the respective portion of adhesive material.

The first conveyor 10 and the second conveyor 20 preferably correspond to said third conveyor belt.

In other words, it is envisaged that a group of conveyor belts (e.g. first, second and third conveyor belts as described in WO 2016/067192 A1) feed the noise reducing elements of the first set S1, and another group of conveyor belts (e.g. other first, second and third conveyor belts) feed the noise reducing elements of the second set S2. The first conveyor 10 may correspond, for example, to the third conveyor belt of the first group, while the second conveyor 20 may correspond, for example, to the third conveyor of the second group.

Preferably, the first conveyor 10 and the second conveyor 20 are made of non-stick material, e.g. rendered anti-adhesive by means of a surface treatment with silicones, so as to not hinder the picking up of the noise reducing elements by the robotized arm 50.

The noise reducing elements of the first set S1 are arranged in order on the first conveyor 10 starting from a first initial noise reducing element E1. The latter is the noise reducing element that precedes, in the advancing direction of the first conveyor 10, all the other noise reducing elements of the first set S1.

The noise reducing elements of the second set S2 are arranged in order on the second conveyor 20 starting from a second initial noise reducing element E2. The latter is the noise reducing element that precedes, in the advancing direction of the second conveyor 20, all the other noise reducing elements of the second set S2.

Preferably, the noise reducing elements of the first set S1 are fed to the working station 1 in alternation to the noise reducing elements of the second set S2.

In general, the noise reducing elements of the first set S1 and of the second set S2 are fed to the working station 1 in accordance with a work program that must be executed by the robotized arm 50 in order to apply the noise reducing elements to the radially inner surface 3 of the tyre 100.

The sequence of tyres supplied to the working station 1 may comprise either substantially equal tyres, in which case the noise reducing elements are applied according to the same pattern, or different tyres, in which case the noise reducing elements are applied according to different patterns. The robotized arm 50 is appropriately controlled to apply to each tyre the specific pattern associated therewith.

The robotized arm 50 picks up one noise reducing element at a time (from the first set S1 or from the second set S2, in accordance with said work program) and applies it to the tyre 100.

In the example of Figure 2, the robotized arm 50 is working on the first initial noise reducing element E1 in a first terminal zone Z1 of the first conveyor 10. The second initial noise reducing element E2 is drawn with dashed lines, because it preferably reaches a second terminal zone Z2 of the second conveyor 20 at a later time.

When the application of noise reducing elements to the tyre 100 is complete, the working station 1 starts working on the next tyres, according to the order defined by said sequence of tyres.

It should be noted that, in the present description, reference is specifically made to the first set S1 of noise reducing elements and to the second set S2 of noise reducing elements, fed by the first conveyor 10 and by the second conveyor 20, respectively. The invention may however also be implemented with a greater number of sets of noise reducing elements and respective conveyors.

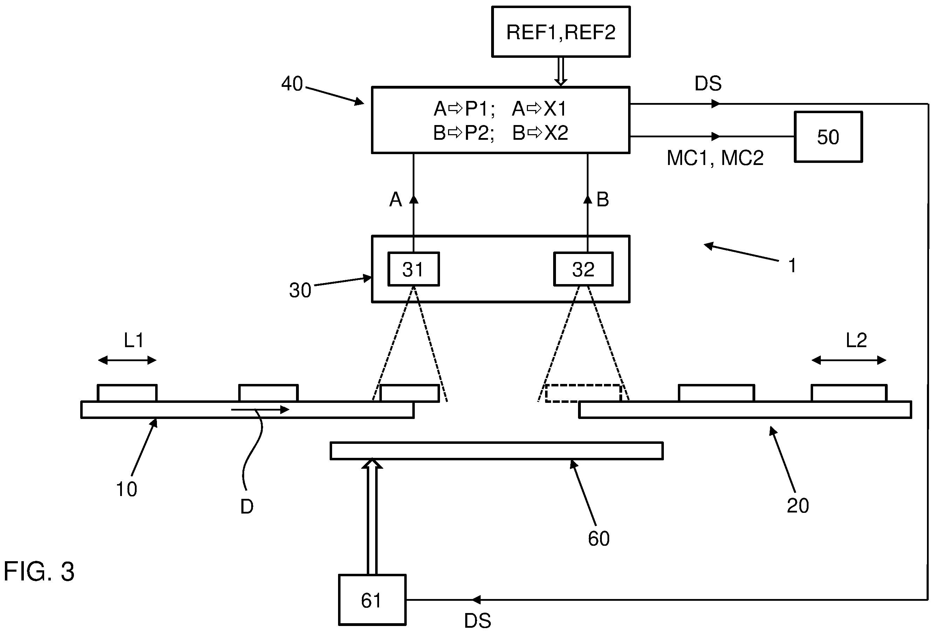

The working station 1 comprises a detection system 30 (Fig. 3).

The detection system 30 is configured for detecting one or more first images A, representative of at least one noise reducing element of the first set S1.

In particular, the detection system 30 may be equipped with a first detection device 31, e.g. implemented as a video camera sensitive to infrared radiations, for detecting the first images A.

In order to detect the first images A, the detection system 30, and in particular the first detection device 31, operates in the first terminal zone Z1 of the first conveyor 10. In practice, the first terminal zone Z1 of the first conveyor 10 is framed, and the first images A are taken when a noise reducing element of the first set S1 is in said first terminal zone Z1.

The first images A are representative of the first initial noise reducing element E1, when the latter is in the first terminal zone Z1.

As will become more apparent below, the first initial noise reducing element E1 may be either applied to the tyre or discarded. In any case, it will then be replaced by another noise reducing element of the first set S1 arriving at the first terminal zone Z1, which will thus become the new first initial noise reducing element.

Therefore, the first images A are preferably representative of all the noise reducing elements of the first set S1, each first image A (or each group of first images A) being representative of a single noise reducing element of the first set S1 when it is in the first terminal zone Z1 of the first conveyor 10.

The detection system 30 is configured for detecting one or more second images B representative of at least one noise reducing element of the second set S2.

In particular, the detection system 30 may be equipped with a second detection device 32, e.g. implemented as a video camera sensitive to infrared radiations, for detecting the second images B.

In order to detect the second images B, the detection system 30, and in particular the second detection device 32, operates in the second terminal zone Z2 of the second conveyor 20. In practice, the second terminal zone Z2 of the second conveyor 20 is framed, and the second images B are taken when a noise reducing element of the second set S2 is in said second terminal zone Z2.

The second images B are representative of the second initial noise reducing element E2, when the latter is in the second terminal zone Z2.

The second conveyor 20 operates in much the same way as the first conveyor 10.

Therefore, the second images B are preferably representative of all the noise reducing elements of the second set S2, each second image B (or each group of second images B) being representative of a single noise reducing element of the second set S2.

Preferably, the working station 1 comprises a contrast wall 60.

The contrast wall 60 is positioned at the first terminal zone Z1 and at the second terminal zone Z2.

In particular, the contrast wall 60 is mounted lower than the first conveyor 10 and the second conveyor 20, so that the first terminal zone Z1 and the second terminal zone Z2 are interposed between the detection system 30 and the contrast wall 60 (as schematically shown in Figure 3).

The contrast wall 60 is preferably light in colour, so as to facilitate the detection by the detection system 30. It is envisaged, in fact, that the noise reducing elements are dark in colour.

Advantageously, the contrast wall 60 can be switched between an operating position and a discarding position.

In the operating position, the contrast wall 60 is at the first and second terminal zones Z1, Z2 and, as aforesaid, facilitates the detection by the detection system 30.

In the discarding position, the contrast wall 60 is moved away from the first and/or second terminal zones Z1, Z2, thus letting the noise reducing element coming from the first conveyor 10 and/or from the second conveyor 20 fall down when it has to be discarded.

For the purpose of moving the contrast wall 60 from the operating position to the discarding position, an actuator 61 is advantageously employed, which may be a pneumatic one, for example.

The contrast wall 60 is normally in the operating position. When it has to be moved into the discarding position, the actuator 61 is activated, which will then cause the necessary movement (translation and/or rotation) of the contrast wall 60.

When the discarding operation is complete, the contrast wall 60 will be brought back into the operating position.

It should be noted that the contrast wall 60 has been described above as a single element associated with both the first terminal zone Z1 and the second terminal zone Z2. However, within the scope of the present invention it is envisaged that two distinct walls may be used, one dedicated to the first terminal zone Z1 and the other one dedicated to the second terminal zone Z2. Such two distinct contrast walls may be controlled by the same actuator or may be each associated with a dedicated actuator.

The working station 1 comprises a processor 40.

The processor 40 may be implemented, for example, as a conventional computer or be a part of a PLC supervising the entire operation of the working station 1. In general terms, the processor 40 may be integrated into any computer capable of interfacing with the robotized arm 50.

The processor 40 receives the first images A.

Based on the first images A, the processor 40 determines first parameters P1, associated with the noise reducing element represented in such first images A.

The first parameters P1 are indicative of coordinates, in a first plane parallel to the first conveyor 10, of a point representative of the at least one noise reducing element of the first set S1.

For example, the first parameters P1 comprise an abscissa and an ordinate, referred to a bidimensional reference system defined on said first plane, of a geometric centre of the represented noise reducing element.

The Applicant observes that, given the substantially homogeneous structure of the noise reducing elements, their geometric centre can represent the centre of gravity with sufficient precision.

The first parameters P1 are also indicative of an angle of orientation of the at least one noise reducing element of the first set S1 relative to a direction determined on the first plane.

Said determined direction may be, for example, the advancing direction of the first conveyor 10.

In practical terms, the first parameters P1 are indicative of where the geometric centre of the noise reducing element is located (in a plan view), and how the same noise reducing element is oriented relative to the advancing direction of the first conveyor 10.

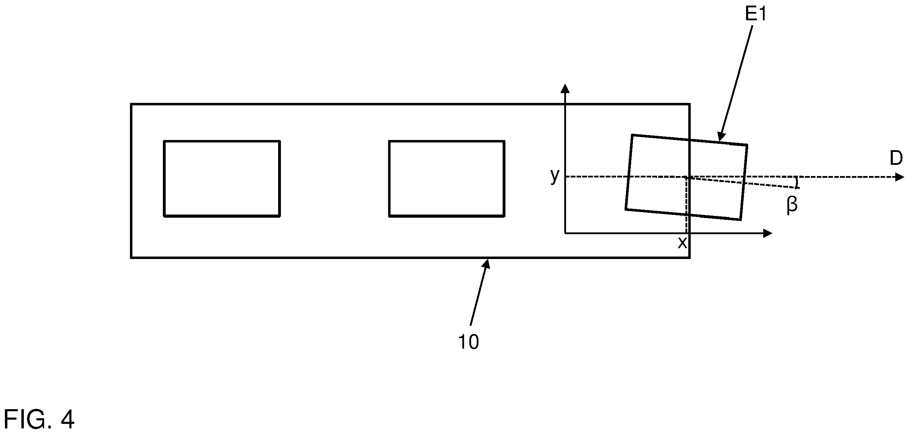

Figure 4 schematically shows the first conveyor 10 and the first initial noise reducing element E1 of the first set S1 positioned thereon. x and y indicate the coordinates of the geometric centre of the noise reducing element, while β is the angle of orientation relative to the advancing direction D of the first conveyor 10, the axis of abscissas x being preferably parallel to said advancing direction D.

Preferably, the processor 40 determines at least one first length X1 of the initial noise reducing element E1 of the first set S1 represented in the first images A. In particular, the processor 40 can determine both the length and the width of the represented noise reducing element.

A first comparison is then made between the dimensions thus acquired and first reference values REF1.

The first reference values REF1 are representative of correct dimensions of the noise reducing element.

If the acquired dimensions are excessively different from the first reference values REF1, i.e. the acquired dimensions do not match the first reference values REF1, then the processor 40 will prevent the initial noise reducing element E1 from being applied to the tyre 100.

For example, if the first length X1 does not match the first dimension L1, the processor 40 will not send the movement commands to the robotized arm 50 for picking up the initial noise reducing element E1 and will let the first conveyor 10 move on and cause the initial noise reducing element E1 to fall down past the first terminal zone Z1.

Conversely, if the acquired dimensions do match the first reference values REF1, then the processor 40 will generate a first movement command MC1 intended for the robotized arm 50.

Preferably, the first movement command MC1 is generated on the basis of the first parameters P1.

In particular, the first movement command MC1 takes into account the position (abscissa x, ordinate y, orientation β) of the initial noise reducing element E1, and guides the robotized arm 50 into a corresponding configuration, so that it will be able to pick up the initial noise reducing element E1 correctly.

In this regard, the Applicant observes that the first initial noise reducing element E1 may have been arranged on the first conveyor 10 in a non-ideal manner, i.e. it may not be centred (in the transverse direction) on the first conveyor 10 and/or may not be oriented parallel to the advancing direction D of the first conveyor.

Based on the first parameters P1, the processor 40 preferably determines to what extent the position and orientation of the first initial noise reducing element E1 differ from the ideal ones - i.e. those which the robotized arm 50, in the absence of further information, would use as a reference in order to position and orient the terminal tool 51 for picking up the first initial noise reducing element E1.

The first parameters P1 are thus used for correctly positioning and orienting the terminal tool 51, so as to precisely couple it to the first initial noise reducing element E1. In particular, the engagement surface 52 comes to substantially match a top surface of the first initial noise reducing element E1.

The first movement command MC1 also causes a further movement of the robotized arm 50 in order to apply the initial noise reducing element E1 to the radially inner surface of the tyre 100.

In any case, due to the motion of the first conveyor 10, a next noise reducing element of the first set S1 will take the position of the first initial noise reducing element E1 just picked up or discarded.

The processor 40 also receives the second images B and operates in the same way, thus determining second parameters P2 associated with the noise reducing elements of the second set S2 represented in said second images B (i.e. the second initial noise reducing element E2).

Such second parameters P2 are indicative of the position and orientation of the second initial noise reducing element E2.

The schematic representation of Figure 4, concerning the first conveyor 10 and the first initial noise reducing element E1, also applies to the second conveyor 20 and the second initial noise reducing element E2. The second parameters P2 are preferably indicative of an abscissa, an ordinate and an orientation of the second initial noise reducing element E2.

Based on the second images B, the processor 40 determines at least one second length X2 of the second initial noise reducing element E2 of the second set S2. In particular, the processor 40 is configured for determining both the length and the width of the second initial noise reducing element E2 of the second set S2.

The second length X2, and preferably all measurements taken, are compared with second reference values REF2.

If the values match, a second movement command MC2 will be generated for the robotized arm 50 to pick up the noise reducing element and apply it to the tyre 50; as previously described with reference to the first initial noise reducing element E1, the terminal tool 51 of the robotized arm 50 will be positioned and oriented according to the second parameters P2, so as to couple said terminal tool 51 to the second initial noise reducing element E2.

Conversely, if there is no matching between the second length X2 and the second reference values REF2, then the second initial noise reducing element E2 will not be applied to the tyre 100. For example, if the second length X2 does not match the second dimension L2, the second conveyor 20 will be moved on, without the second initial noise reducing element E2 being picked up, until the second initial noise reducing element E2 goes past the second terminal zone Z2.

In any case, due to the motion of the second conveyor 20, a next noise reducing element of the second set S2 will take the position of the second initial noise reducing element E2 just picked up or discarded.

When a noise reducing element has to be discarded, i.e. when there is no matching between the at least one first length X1 and the first reference values REF1 and/or between the at least one second length X2 and the second reference values REF2, the processor 40 will preferably generate a discard signal DS.

The discard signal DS will be sent to said actuator 61 and cause a displacement of the contrast wall 60. In this way, the contrast wall 60 will not support or hold the discarded noise reducing element, which in the meantime will have arrived at the end of the respective conveyor 10, 20 and fallen down in front of it.

The noise reducing element can then be collected in a suitable container positioned underneath the contrast wall 60 at the first and second terminal zones Z1, Z2, so that it can be further machined and given more precise dimensions, or else definitively discarded.

## Claims

1. Method for controlling the application of noise reducing elements to tyres for vehicle wheels, comprising:
feeding a sequence of tyres to a working station (1);
feeding to said working station (1), by means of a first conveyor (10), a first set (S1) of noise reducing elements;
activating a detection system (30) for detecting one or more first images (A) representative of at least one noise reducing element of said first set (S1);
activating a processor (40) for determining, as a function of said first images (A), first parameters (P1) indicative of:
coordinates, in a first plane parallel to said first conveyor (10), of a point representative of said at least one noise reducing element of said first set (S1), and
an angle of orientation of said at least one noise reducing element of said first set (S1) relative to a direction determined on said first plane;
based on said first parameters (P1), sending to a robotized arm (50), included in said working station (1) and equipped with a terminal tool (51), a first movement command (MC1) for:
positioning and orienting said terminal tool (51) in accordance with said first parameters (P1), so as to couple said terminal tool (51) to said at least one noise reducing element of said first set (S1);
picking up, from said first conveyor (10), said at least one noise reducing element of said first set (S1) and applying the same to the radially inner surface of a tyre (100) of said sequence.

2. Method according to claim 1, wherein the noise reducing elements of said first set (S1) are arranged in order on said first conveyor (10) starting from a first initial noise reducing element (E1), the first initial noise reducing element (E1) being the noise reducing element that precedes, in the advancing direction of said first conveyor (10), all the other noise reducing elements of the first set (S1),
wherein said first images (A) are representative of said first initial noise reducing element (E1),
wherein said first parameters (P1) are associated with said first initial noise reducing element (E1).

3. Method according to any one of the preceding claims, comprising activating said processor (40) for:
determining, on the basis of said first images (A), at least one first length (X1) of said at least one noise reducing element of said first set (51);
making a first comparison between said first length (X1) and one or more first reference values (REF1);
selectively generating said first movement command (MC1) as a function of said first comparison.

4. Method according to any one of the preceding claims, wherein the noise reducing elements of the first set (51) substantially have a first dimension (L1), said first dimension (L1) being greater than or equal to 100 mm and/or smaller than or equal to 300 mm.

5. Method according to claim 3 or claim 4 when dependent from claim 3, wherein said first conveyor (10) has a first terminal zone (Z1), wherefrom said at least one noise reducing element of said first set (S1) is picked up,
said method further comprising providing a contrast wall (60) at said first terminal zone (Z1),
wherein, if said first length (X1) does not match said one or more first reference values (REF1), said processor (40) will generate a discard signal (DS) to move said contrast wall (60) and cause said at least one noise reducing element of said first set (S1) to be discarded.

6. Method according to any one of the preceding claims, comprising:
feeding to said working station (1), by means of at least one second conveyor (20), at least one second set (S2) of noise reducing elements;
activating said detection system (30) for detecting one or more second images (B) representative of at least one noise reducing element of said second set (S2);
activating said processor (40) for determining, as a function of said second images (B), second parameters (P2) indicative of:
coordinates, in a second plane parallel to said second conveyor (20), of a point representative of said at least one noise reducing element of said second set (S2), and
an angle of orientation of said at least one noise reducing element of said second set (S2) relative to a direction determined on said second plane;
based on said second parameters (P2), sending to said robotized arm (50) a second movement command (MC2) for:
positioning and orienting said terminal tool (51) in accordance with said second parameters (P2), so as to couple said terminal tool (51) to said at least one noise reducing element of said second set (S2);
picking up, from said second conveyor (20), said at least one noise reducing element of said second set (S2) and applying the same to the radially inner surface of said tyre (100).

7. Method according to claim 6, wherein the noise reducing elements of said second set (S2) are arranged in order on said second conveyor (20) starting from a second initial noise reducing element (E2), the second initial noise reducing element (E2) being the noise reducing element that precedes, in the advancing direction of said second conveyor (20), all the other noise reducing elements of the second set (S2),
wherein said second images (B) are representative of said second initial noise reducing element (E2),
wherein said second parameters (P2) are associated with said second initial noise reducing element (E2).

8. Method according to claim 6 or 7, comprising activating said processor (40) for:
determining, on the basis of said second images (B), at least one second length (X2) of said at least one noise reducing element of said second set (S2);
making a second comparison between said second length (X2) and one or more second reference values (REF2);
selectively generating said second movement command (MC2) as a function of said second comparison.

9. Method according to any one of claims 6 to 8, wherein the noise reducing elements of the second set (S2) substantially have a second dimension (L2) different from said first dimension (L1), said second dimension (L2) being greater than or equal to 100 mm and/or smaller than or equal to 300 mm,
wherein a difference between the first dimension (L1) of the noise reducing elements of said first set (S1) and the second dimension (L2) of the noise reducing elements of said second set (S2) is greater than or equal to 10 mm and/or smaller than or equal to 80 mm.

10. Working station for the application of noise reducing elements to tyres for vehicle wheels, comprising:
a robotized arm (50) configured for picking up noise reducing elements of a first set (S1), supplied by a first conveyor (10);
a detection system (30) configured for detecting one or more first images (A) representative of at least one noise reducing element of said first set (S1);
a processor (40) configured for:
determining, as a function of said first images (A), first parameters (P1) indicative of:
coordinates, in a first plane parallel to said first conveyor (10), of a point representative of said at least one noise reducing element of said first set (S1), and
an angle of orientation of said noise reducing element of said first set (S1) relative to a direction determined on said first plane;
based on said first parameters (P1), sending to said robotized arm (50) a first movement command (MC1) for:
positioning and orienting said terminal tool (51) in accordance with said first parameters (P1), so as to couple said terminal tool (51) to said at least one noise reducing element of said first set (S1);
picking up, from said first conveyor (10), said at least one noise reducing element of said first set (S1) and applying the same to the radially inner surface of a tyre (100).

11. Working station according to claim 10, wherein said processor (40) is configured for:
determining, on the basis of said first images (A), at least one first length (X1) of said at least one noise reducing element of said first set (51);
making a first comparison between said first length (X1) and one or more first reference values (REF1);
selectively generating said first movement command (MC1) as a function of said first comparison.

12. Working station according to claim 10 or 11, wherein said first conveyor (10) has a first terminal zone (Z1), wherefrom said at least one noise reducing element of said first set (S1) is picked up,
said working station (1) further comprising a contrast wall (60) positioned at said first terminal zone (Z1),
wherein, if said first length (X1) does not match said one or more first reference values (REF1), said processor (40) is configured for generating a discard signal (DS) to move said contrast wall (60) and cause said at least one noise reducing element of said first set (S1) to be discarded.

13. Working station according to any one of claims 10 to 12, wherein said robotized arm (50) is configured for picking up noise reducing elements of a second set (S2), supplied by a second conveyor (20), the noise reducing elements of the first set (S1) having substantially a first dimension (L1) different from a second dimension (L2) of the noise reducing elements of the second set (S2), wherein said detection system (30) is configured for detecting one or more second images (B) representative of at least one noise reducing element of said second set (S2), wherein said processor (40) is configured for determining, as a function of said second images (B), second parameters (P2) indicative of:
coordinates, in a second plane parallel to said second conveyor (20), of a point representative of said at least one noise reducing element of said second set (S2), and
an angle of orientation of said at least one noise reducing element of said second set (S2) relative to a direction determined on said second plane;
wherein said processor (40) is configured for sending to said robotized arm (50), based on said second parameters (P2), a second movement command (MC2) for:
positioning and orienting said terminal tool (51) in accordance with said second parameters (P2), so as to couple said terminal tool (51) to said at least one noise reducing element of said second set (S2);
picking up, from said second conveyor (20), said at least one noise reducing element of said second set (S2) and applying the same to the radially inner surface of said tyre (100).

14. Working station according to claim 13, wherein said processor (40) is configured for:
determining, on the basis of said second images (B), at least one second length (X2) of said at least one noise reducing element of said second set (S2);
making a second comparison between said second length (X2) and one or more second reference values (REF2);
selectively generating said second movement command (MC2) as a function of said second comparison.

15. Working station according to any one of claims 13 or 14, wherein said second conveyor (20) has a second terminal zone (Z2), wherefrom said at least one noise reducing element of said second set (S2) is picked up,
wherein said contrast wall (60) is positioned at said second terminal zone (Z2),
wherein, if said second length (X2) does not match said one or more second reference values (REF2), said processor (40) is configured for generating said discard signal (DS) to move said contrast wall (60) and cause said at least one noise reducing element of said second set (S2) to be discarded.

## Patentansprüche

1. Verfahren zum Steuern der Anwendung von geräuschreduzierenden Elementen bei Reifen für Fahrzeugräder, umfassend:
Zuführen einer Sequenz von Reifen zu einer Arbeitsstation (1);
Zuführen zu der Arbeitsstation (1), durch ein erstes Förderband (10), eines ersten Satzes (S1) geräuschreduzierender Elemente;
Aktivieren eines Erkennungssystems (30) zum Erkennen von einem oder mehreren ersten Bildern (A), die mindestens ein geräuschreduzierendes Element des ersten Satzes (S1) darstellen;
Aktivieren eines Prozessors (40) zum Bestimmen, als eine Funktion der ersten Bilder (A), von ersten Parametern (P1), die Folgendes angeben:
Koordinaten, in einer ersten Ebene parallel zu dem ersten Förderband (10), eines Punkts, der das mindestens eine geräuschreduzierende Element des ersten Satzes (S1) darstellt, und
einen Orientierungswinkel des mindestens einen geräuschreduzierenden Elements des ersten Satzes (S1) relativ zu einer Richtung, die auf der ersten Ebene bestimmt wird;
basierend auf den ersten Parametern (P1), Senden, an einen robotisierten Arm (50), der in der Arbeitsstation (1) beinhaltet ist und mit einem Endwerkzeug (51) ausgestattet ist, eines ersten Bewegungsbefehls (MC1) zum:
Positionieren und Ausrichten des Endwerkzeugs (51) gemäß den ersten Parametern (P1), um das Endwerkzeug (51) mit dem mindestens einen geräuschreduzierenden Element des ersten Satzes (S1) zu koppeln;
Aufnehmen, von dem ersten Förderband (10), des mindestens einen geräuschreduzierenden Elements des ersten Satzes (S1) und Anwenden dessen auf die radial innere Oberfläche eines Reifens (100) der Sequenz.

2. Verfahren nach Anspruch 1, wobei die geräuschreduzierenden Elemente des ersten Satzes (S1) in Reihenfolge auf dem ersten Förderband (10) angeordnet sind, beginnend mit einem ersten anfänglichen geräuschreduzierenden Element (E1), wobei das erste anfängliche geräuschreduzierende Element (E1) das geräuschreduzierende Element ist, das, in die Vorschubrichtung des ersten Förderbands (10), allen anderen geräuschreduzierenden Elemente des ersten Satzes (S1) vorausgeht,
wobei die ersten Bilder (A) das erste anfängliche geräuschreduzierende Element (E1) darstellen,
wobei die ersten Parameter (P1) dem ersten anfänglichen geräuschreduzierenden Element (E1) zugeordnet sind.

3. Verfahren nach einem der vorhergehenden Ansprüche, umfassend das Aktivieren des Prozessors (40) zum:
Bestimmen, basierend auf den ersten Bildern (A), von mindestens einer ersten Länge (X1) des mindestens einen geräuschreduzierenden Elements des ersten Satzes (S1);
Anstellen eines ersten Vergleichs zwischen der ersten Länge (X1) und einem oder mehreren ersten Referenzwerten (REF1);
selektiven Erzeugen des ersten Bewegungsbefehls (MC1) als eine Funktion des ersten Vergleichs.

4. Verfahren nach einem der vorhergehenden Ansprüche, wobei die geräuschreduzierenden Elemente des ersten Satzes (S1) im Wesentlichen eine erste Abmessung (L1) aufweisen, wobei die erste Abmessung (L1) größer als oder gleich wie 100 mm und/oder kleiner als oder gleich wie 300 mm ist.

5. Verfahren nach Anspruch 3 oder Anspruch 4 in Abhängigkeit von Anspruch 3, wobei das erste Förderband (10) eine erste Endzone (Z1) hat, wovon das mindestens eine geräuschreduzierende Element des ersten Satzes (S1) aufgenommen wird,
wobei das Verfahren ferner das Bereitstellen einer Kontrastwand (60) an der ersten Endzone (Z1) umfasst,
wobei, wenn die erste Länge (X1) nicht mit dem einen oder den mehreren ersten Referenzwerten (REF1) übereinstimmt, der Prozessor (40) ein Verwerfsignal (DS) erzeugen wird, um die Kontrastwand (60) zu bewegen und zu verursachen, dass das mindestens eine geräuschreduzierende Element des ersten Satzes (S1) verworfen wird.

6. Verfahren nach einem der vorhergehenden Ansprüche, umfassend:
Zuführen zu der Arbeitsstation (1), durch mindestens ein zweites Förderband (20), mindestens eines zweiten Satzes (S2) geräuschreduzierender Elemente;
Aktivieren des Erkennungssystems (30) zum Erkennen von einem oder mehreren zweiten Bildern (B), die mindestens ein geräuschreduzierendes Element des zweiten Satzes (S2) darstellen;
Aktivieren des Prozessors (40) zum Bestimmen, als eine Funktion der zweiten Bilder (B), von zweiten Parametern (P2), die Folgendes angeben:
Koordinaten, in einer zweiten Ebene parallel zu dem zweiten Förderband (20), eines Punkts, der das mindestens eine geräuschreduzierende Element des zweiten Satzes (S2) darstellt, und
einen Orientierungswinkel des mindestens einen geräuschreduzierenden Elements des zweiten Satzes (S2) relativ zu einer Richtung, die auf der zweiten Ebene bestimmt wird;
basierend auf den zweiten Parametern (P2), Senden, an den robotisierten Arm (50), eines zweiten Bewegungsbefehls (MC2) zum:
Positionieren und Ausrichten des Endwerkzeugs (51) gemäß den zweiten Parametern (P2), um das Endwerkzeug (51) mit dem mindestens einen geräuschreduzierenden Element des zweiten Satzes (S2) zu koppeln;
Aufnehmen, von dem zweiten Förderband (20), des mindestens einen geräuschreduzierenden Elements des zweiten Satzes (S2) und Anwenden dessen auf die radial innere Oberfläche des Reifens (100).

7. Verfahren nach Anspruch 6, wobei die geräuschreduzierenden Elemente des zweiten Satzes (S2) in Reihenfolge auf dem zweiten Förderband (20) angeordnet sind, beginnend mit einem zweiten anfänglichen geräuschreduzierenden Element (E2), wobei das zweite anfängliche geräuschreduzierende Element (E2) das geräuschreduzierende Element ist, das, in die Vorschubrichtung des zweiten Förderbands (20), allen anderen geräuschreduzierenden Elemente des zweiten Satzes (S2) vorausgeht,
wobei die zweiten Bilder (B) das zweite anfängliche geräuschreduzierende Element (E2) darstellen,
wobei die zweiten Parameter (P2) dem zweiten anfänglichen geräuschreduzierenden Element (E2) zugeordnet sind.

8. Verfahren nach Anspruch 6 oder 7, umfassend das Aktivieren des Prozessors (40) zum:
Bestimmen, basierend auf den zweiten Bildern (B), von mindestens einer zweiten Länge (X2) des mindestens einen geräuschreduzierenden Elements des zweiten Satzes (S2);
Anstellen eines zweiten Vergleichs zwischen der zweiten Länge (X2) und einem oder mehreren zweiten Referenzwerten (REF2);
selektiven Erzeugen des zweiten Bewegungsbefehls (MC2) als eine Funktion des zweiten Vergleichs.

9. Verfahren nach einem der Ansprüche 6 bis 8, wobei die geräuschreduzierenden Elemente des zweiten Satzes (S2) im Wesentlichen eine zweite Abmessung (L2) aufweisen, die anders als die erste Abmessung (L1) ist, wobei die zweite Abmessung (L2) größer als oder gleich wie 100 mm und/oder kleiner als oder gleich wie 300 mm ist,
wobei eine Differenz zwischen der ersten Abmessung (L1) der geräuschreduzierenden Elemente des ersten Satzes (S1) und der zweiten Abmessung (L2) der geräuschreduzierenden Elemente des zweiten Satzes (S2) größer als oder gleich wie 10 mm und/oder kleiner als oder gleich wie 80 mm ist.

10. Arbeitsstation für die Anwendung von geräuschreduzierenden Elementen bei Reifen für Fahrzeugräder, umfassend:
einen robotisierten Arm (50), der konfiguriert ist, um geräuschreduzierende Elemente eines ersten Satzes (S1) aufzunehmen, die durch ein erstes Förderband (10) zugeführt werden;
ein Erkennungssystem (30), das konfiguriert ist zum Erkennen von einem oder mehreren ersten Bildern (A), die mindestens ein geräuschreduzierendes Element des ersten Satzes (S1) darstellen;
einen Prozessor (40), der konfiguriert ist zum:
Bestimmen, als eine Funktion der ersten Bilder (A), von ersten Parametern (P1), die Folgendes angeben:
Koordinaten, in einer ersten Ebene parallel zu dem ersten Förderband (10), eines Punkts, der das mindestens eine geräuschreduzierende Element des ersten Satzes (S1) darstellt, und
einen Orientierungswinkel des geräuschreduzierenden Elements des ersten Satzes (S1) relativ zu einer Richtung, die auf der ersten Ebene bestimmt wird;
basierend auf den ersten Parametern (P1), Senden, an den robotisierten Arm (50), eines ersten Bewegungsbefehls (MC1) zum:
Positionieren und Ausrichten des Endwerkzeugs (51) gemäß den ersten Parametern (P1), um das Endwerkzeug (51) mit dem mindestens einen geräuschreduzierenden Element des ersten Satzes (S1) zu koppeln;
Aufnehmen, von dem ersten Förderband (10), des mindestens einen geräuschreduzierenden Elements des ersten Satzes (S1) und Anwenden dessen auf die radial innere Oberfläche eines Reifens (100).

11. Arbeitsstation nach Anspruch 10, wobei der Prozessor (40) konfiguriert ist zum:
Bestimmen, basierend auf den ersten Bildern (A), von mindestens einer ersten Länge (X1) des mindestens einen geräuschreduzierenden Elements des ersten Satzes (S1);
Anstellen eines ersten Vergleichs zwischen der ersten Länge (X1) und einem oder mehreren ersten Referenzwerten (REF1);
selektiven Erzeugen des ersten Bewegungsbefehls (MC1) als eine Funktion des ersten Vergleichs.

12. Arbeitsstation nach Anspruch 10 oder 11, wobei das erste Förderband (10) eine erste Endzone (Z1) hat, wovon das mindestens eine geräuschreduzierende Element des ersten Satzes (S1) aufgenommen wird,
wobei die Arbeitsstation (1) ferner eine Kontrastwand (60) umfasst, die an der ersten Endzone (Z1) positioniert ist, wobei, wenn die erste Länge (X1) nicht mit dem einen oder den mehreren ersten Referenzwerten (REF1) übereinstimmt, der Prozessor (40) konfiguriert ist zum Erzeugen eines Verwerfsignals (DS), um die Kontrastwand (60) zu bewegen und zu verursachen, dass das mindestens eine geräuschreduzierende Element des ersten Satzes (S1) verworfen wird.

13. Arbeitsstation nach einem der Ansprüche 10 bis 12, wobei der robotisierte Arm (50) konfiguriert ist zum Aufnehmen von geräuschreduzierenden Elementen eines zweiten Satzes (S2), die durch ein zweites Förderband (20) zugeführt werden, wobei die geräuschreduzierenden Elemente des ersten Satzes (S1) im Wesentlichen eine erste Abmessung (L1) aufweisen, die anders als eine zweite Abmessung (L2) der geräuschreduzierenden Elemente des zweiten Satzes (S2) ist, wobei das Erkennungssystem (30) konfiguriert ist zum Erkennen von einem oder mehreren zweiten Bildern (B), die mindestens ein geräuschreduzierendes Element des zweiten Satzes (S2) darstellen, wobei der Prozessor (40) konfiguriert ist zum Bestimmen, als eine Funktion der zweiten Bilder (B), von zweiten Parametern (P2), die Folgendes angeben:
Koordinaten, in einer zweiten Ebene parallel zu dem zweiten Förderband (20), eines Punkts, der das mindestens eine geräuschreduzierende Element des zweiten Satzes (S2) darstellt, und
einen Orientierungswinkel des mindestens einen geräuschreduzierenden Elements des zweiten Satzes (S2) relativ zu einer Richtung, die auf der zweiten Ebene bestimmt wird;
wobei der Prozessor (40) konfiguriert ist zum Senden an den robotisierten Arm (50), basierend auf den zweiten Parametern (P2), eines zweiten Bewegungsbefehls (MC2) zum:
Positionieren und Ausrichten des Endwerkzeugs (51) gemäß den zweiten Parametern (P2), um das Endwerkzeug (51) mit dem mindestens einen geräuschreduzierenden Element des zweiten Satzes (S2) zu koppeln; Aufnehmen, von dem zweiten Förderband (20), des mindestens einen geräuschreduzierenden Elements des zweiten Satzes (S2) und Anwenden dessen auf die radial innere Oberfläche des Reifens (100).

14. Arbeitsstation nach Anspruch 13, wobei der Prozessor (40) konfiguriert ist zum:
Bestimmen, basierend auf den zweiten Bildern (B), von mindestens einer zweiten Länge (X2) des mindestens einen geräuschreduzierenden Elements des zweiten Satzes (S2);
Anstellen eines zweiten Vergleichs zwischen der zweiten Länge (X2) und einem oder mehreren zweiten Referenzwerten (REF2);
selektiven Erzeugen des zweiten Bewegungsbefehls (MC2) als eine Funktion des zweiten Vergleichs.

15. Arbeitsstation nach einem der Ansprüche 13 oder 14, wobei das zweite Förderband (20) eine zweite Endzone (Z2) hat, wovon das mindestens eine geräuschreduzierende Element des zweiten Satzes (S2) aufgenommen wird,
wobei die Kontrastwand (60) an der zweiten Endzone (Z2) positioniert ist,
wobei, wenn die zweite Länge (X2) nicht mit dem einen oder den mehreren zweiten Referenzwerten (REF2) übereinstimmt, der Prozessor (40) konfiguriert ist zum Erzeugen des Verwerfsignals (DS), um die Kontrastwand (60) zu bewegen und zu verursachen, dass das mindestens eine geräuschreduzierende Element des zweiten Satzes (S2) verworfen wird.

## Revendications

1. Procédé pour commander l'application d'éléments de réduction de bruit sur des pneus pour des roues de véhicule, comprenant :
l'alimentation, à un poste de travail (1), d'une séquence de pneus ;
l'alimentation, audit poste de travail (1), au moyen d'un premier transporteur (10), d'un premier ensemble (S1) d'éléments de réduction de bruit ;
l'activation d'un système de détection (30) pour détecter une ou plusieurs premières images (A) représentatives d'au moins un élément de réduction de bruit dudit premier ensemble (S1) ;
l'activation d'un processeur (40) pour déterminer, en fonction desdites premières images (A), des premiers paramètres (P1) indicatifs de :
coordonnées, dans un premier plan parallèle audit premier transporteur (10), d'un point représentatif dudit au moins un élément de réduction de bruit dudit premier ensemble (51), et
un angle d'orientation dudit au moins un élément de réduction de bruit dudit premier ensemble (S1) relativement à une direction déterminée sur ledit premier plan ;
sur la base desdits premiers paramètres (P1), l'envoi, à un bras robotisé (50), inclus dans ledit poste de travail (1) et équipé d'un outil terminal (51), d'une première instruction de mouvement (MC1) pour :
le positionnement et l'orientation dudit outil terminal (51) conformément auxdits premiers paramètres (P1), afin d'accoupler ledit outil terminal (51) audit au moins un élément de réduction de bruit dudit premier ensemble (S1) ;
le ramassage, à partir dudit premier transporteur (10), dudit au moins un élément de réduction de bruit dudit premier ensemble (S1) et l'application de celui-ci sur la surface radialement intérieure d'un pneu (100) de ladite séquence.

2. Procédé selon la revendication 1, dans lequel les éléments de réduction de bruit dudit premier ensemble (S1) sont agencés en ordre sur ledit premier transporteur (10) en commençant à partir d'un premier élément de réduction de bruit initial (E1), le premier élément de réduction de bruit initial (E1) étant l'élément de réduction de bruit qui précède, dans la direction d'avance dudit premier transporteur (10), tous les autres éléments de réduction de bruit du premier ensemble (51),
dans lequel lesdites premières images (A) sont représentatives dudit premier élément de réduction de bruit initial (E1),
dans lequel lesdits premiers paramètres (P1) sont associés audit premier élément de réduction de bruit initial (E1).

3. Procédé selon l'une quelconque des revendications précédentes, comprenant l'activation dudit processeur (40) pour :
la détermination, sur la base desdites premières images (A), d'au moins une première longueur (X1) dudit au moins un élément de réduction de bruit dudit premier ensemble (S1) ;
la réalisation d'une première comparaison entre ladite première longueur (X1) et une ou plusieurs premières valeurs de référence (REF1) ;
la génération sélective de ladite première instruction de mouvement (MC1) en fonction de ladite première comparaison.

4. Procédé selon l'une quelconque des revendications précédentes, dans lequel les éléments de réduction de bruit du premier ensemble (S1) ont sensiblement une première dimension (L1), ladite première dimension (L1) étant supérieure ou égale à 100 mm et/ou inférieure ou égale à 300 mm.

5. Procédé selon la revendication 3 ou la revendication 4, lorsqu'elle dépend de la revendication 3, dans lequel ledit premier transporteur (10) a une première zone terminale (Z1), d'où ledit au moins un élément de réduction de bruit dudit premier ensemble (S1) est ramassé,
ledit procédé comprenant en outre la fourniture d'une paroi de contraste (60) dans ladite première zone terminale (Z1),
dans lequel, si ladite première longueur (X1) ne correspond pas à ladite une ou auxdites plusieurs premières valeurs de référence (REF1), ledit processeur (40) générera un signal de rejet (DS) pour déplacer ladite paroi de contraste (60) et faire en sorte que ledit au moins un élément de réduction de bruit dudit premier ensemble (S1) soit rejeté.

6. Procédé selon l'une quelconque des revendications précédentes, comprenant :
l'alimentation, audit poste de travail (1), au moyen d'au moins un second transporteur (20), d'au moins un second ensemble (S2) d'éléments de réduction de bruit ;
l'activation dudit système de détection (30) pour détecter une ou plusieurs secondes images (B) représentatives d'au moins un élément de réduction de bruit dudit second ensemble (S2) ;
l'activation dudit processeur (40) pour déterminer, en fonction desdites secondes images (B), des seconds paramètres (P2) indicatifs de :
coordonnées, dans un second plan parallèle audit second transporteur (20), d'un point représentatif dudit au moins un élément de réduction de bruit dudit second ensemble (S2), et
un angle d'orientation dudit au moins un élément de réduction de bruit dudit second ensemble (S2) relativement à une direction déterminée sur ledit second plan ;
sur la base desdits seconds paramètres (P2), l'envoi, audit bras robotisé (50), d'une seconde instruction de mouvement (MC2) pour :
le positionnement et l'orientation dudit outil terminal (51) conformément auxdits seconds paramètres (P2), afin d'accoupler ledit outil terminal (51) audit au moins un élément de réduction de bruit dudit second ensemble (S2) ;
le ramassage, à partir dudit second transporteur (20), dudit au moins un élément de réduction de bruit dudit second ensemble (S2) et l'application de celui-ci sur la surface radialement intérieure dudit pneu (100).

7. Procédé selon la revendication 6, dans lequel les éléments de réduction de bruit dudit second ensemble (S2) sont agencés en ordre sur ledit second transporteur (20) commençant à partir d'un second élément de réduction de bruit initial (E2), le second élément de réduction de bruit initial (E2) étant l'élément de réduction de bruit qui précède, dans la direction d'avance dudit second transporteur (20), tous les autres éléments de réduction de bruit du second ensemble (S2),
dans lequel lesdites secondes images (B) sont représentatives dudit second élément de réduction de bruit initial (E2),
dans lequel lesdits seconds paramètres (P2) sont associés audit second élément de réduction de bruit initial (E2).

8. Procédé selon la revendication 6 ou 7, comprenant l'activation dudit processeur (40) pour :
la détermination, sur la base desdites secondes images (B), d'au moins une seconde longueur (X2) dudit au moins un élément de réduction de bruit dudit second ensemble (S2) ;
la réalisation d'une seconde comparaison entre ladite seconde longueur (X2) et une ou plusieurs secondes valeurs de référence (REF2) ;
la génération sélective de ladite seconde instruction de mouvement (MC2) en fonction de ladite seconde comparaison.

9. Procédé selon l'une quelconque des revendications 6 à 8, dans lequel les éléments de réduction de bruit du second ensemble (S2) ont sensiblement une seconde dimension (L2) différente de ladite première dimension (L1), ladite seconde dimension (L2) étant supérieure ou égale à 100 mm et/ou inférieure ou égale à 300 mm,
dans lequel une différence entre la première dimension (L1) des éléments de réduction de bruit dudit premier ensemble (S1) et la seconde dimension (L2) des éléments de réduction de bruit dudit second ensemble (S2) est supérieure ou égale à 10 mm et/ou inférieure ou égale à 80 mm.

10. Poste de travail pour l'application d'éléments de réduction de bruit sur des pneus pour des roues de véhicule, comprenant :
un bras robotisé (50) configuré pour le ramassage d'éléments de réduction de bruit d'un premier ensemble (51), dont l'alimentation est effectuée par un premier transporteur (10) ;
un système de détection (30) configuré pour détecter une ou plusieurs premières images (A) représentatives d'au moins un élément de réduction de bruit dudit premier ensemble (S1) ;
un processeur (40) configuré pour :
la détermination, en fonction desdites premières images (A), de premiers paramètres (P1) indicatifs de :
coordonnées, dans un premier plan parallèle audit premier transporteur (10), d'un point représentatif dudit au moins un élément de réduction de bruit dudit premier ensemble (51), et
un angle d'orientation dudit élément de réduction de bruit dudit premier ensemble (S1) relativement à une direction déterminée sur ledit premier plan ;
sur la base desdits premiers paramètres (P1), l'envoi, audit bras robotisé (50), d'une première instruction de mouvement (MC1) pour :
le positionnement et l'orientation dudit outil terminal (51) conformément auxdits premiers paramètres (P1), afin d'accoupler ledit outil terminal (51) audit au moins un élément de réduction de bruit dudit premier ensemble (S1) ;
le ramassage, à partir dudit premier transporteur (10), dudit au moins un élément de réduction de bruit dudit premier ensemble (S1) et l'application de celui-ci sur la surface radialement intérieure d'un pneu (100).

11. Poste de travail selon la revendication 10, dans lequel ledit processeur (40) est configuré pour :
la détermination, sur la base desdites premières images (A), d'au moins une première longueur (X1) dudit au moins un élément de réduction de bruit dudit premier ensemble (S1) ;
la réalisation d'une première comparaison entre ladite première longueur (X1) et une ou plusieurs premières valeurs de référence (REF1) ;
la génération sélective de ladite première instruction de mouvement (MC1) en fonction de ladite première comparaison.

12. Poste de travail selon la revendication 10 ou 11, dans lequel ledit premier transporteur (10) a une première zone terminale (Z1), d'où ledit au moins un élément de réduction de bruit dudit premier ensemble (S1) est ramassé,
ledit poste de travail (1) comprenant en outre une paroi de contraste (60) positionnée dans ladite première zone terminale (Z1), dans lequel, si ladite première longueur (X1) ne correspond pas à ladite une ou auxdites plusieurs premières valeurs de référence (REF1), ledit processeur (40) est configuré pour générer un signal de rejet (DS) pour déplacer ladite paroi de contraste (60) et faire en sorte que ledit au moins un élément de réduction de bruit dudit premier ensemble (S1) soit rejeté.

13. Poste de travail selon l'une quelconque des revendications 10 à 12, dans lequel ledit bras robotisé (50) est configuré pour le ramassage d'éléments de réduction de bruit d'un second ensemble (S2), dont l'alimentation est effectuée par un second transporteur (20), les éléments de réduction de bruit du premier ensemble (S1) ayant sensiblement une première dimension (L1) différente d'une seconde dimension (L2) des éléments de réduction de bruit du second ensemble (S2), dans lequel ledit système de détection (30) est configuré pour détecter une ou plusieurs secondes images (B) représentatives d'au moins un élément de réduction de bruit dudit second ensemble (S2), dans lequel ledit processeur (40) est configuré pour déterminer, en fonction desdites secondes images (B), des seconds paramètres (P2) indicatifs de :
coordonnées, dans un second plan parallèle audit second transporteur (20), d'un point représentatif dudit au moins un élément de réduction de bruit dudit second ensemble (S2), et
un angle d'orientation dudit au moins un élément de réduction de bruit dudit second ensemble (S2) relativement à une direction déterminée sur ledit second plan ;
dans lequel ledit processeur (40) est configuré pour envoyer, audit bras robotisé (50), sur la base desdits seconds paramètres (P2), une seconde instruction de mouvement (MC2) pour :
le positionnement et l'orientation dudit outil terminal (51) conformément auxdits seconds paramètres (P2), afin d'accoupler ledit outil terminal (51) audit au moins un élément de réduction de bruit dudit second ensemble (S2) ; le ramassage, à partir dudit second transporteur (20), dudit au moins un élément de réduction de bruit dudit second ensemble (S2) et l'application de celui-ci sur la surface radialement intérieure dudit pneu (100).

14. Poste de travail selon la revendication 13, dans lequel ledit processeur (40) est configuré pour :
la détermination, sur la base desdites secondes images (B), d'au moins une seconde longueur (X2) dudit au moins un élément de réduction de bruit dudit second ensemble (S2) ;
la réalisation d'une seconde comparaison entre ladite seconde longueur (X2) et une ou plusieurs secondes valeurs de référence (REF2) ;
la génération sélective de ladite seconde instruction de mouvement (MC2) en fonction de ladite seconde comparaison.

15. Poste de travail selon l'une quelconque des revendications 13 ou 14, dans lequel ledit second transporteur (20) a une seconde zone terminale (Z2), d'où ledit au moins un élément de réduction de bruit dudit second ensemble (S2) est ramassé,
dans lequel ladite paroi de contraste (60) est positionnée dans ladite seconde zone terminale (Z2),
dans lequel, si ladite seconde longueur (X2) ne correspond pas à ladite une ou auxdites plusieurs secondes valeurs de référence (REF2), ledit processeur (40) est configuré pour générer ledit signal de rejet (DS) pour déplacer ladite paroi de contraste (60) et faire en sorte que ledit au moins un élément de réduction de bruit dudit second ensemble (S2) soit rejeté.
